# FASCICULE DE BREVET EUROPEEN

(11) **EP 0 639 012 B1**
(45) Date de publication et mention de la délivrance du brevet: **07.04.1999**
(21) Numéro de dépôt: 94460023.8
(22) Date de dépôt: 08.07.1994
(51) Int. Cl.: H04L 12/26, H04Q 11/04

(54) **Procédé et dispositif de surveillance et/ou de test d'un reseau de telecommunication de type atm**
Verfahren und Vorrichtung zum Überwachen und/oder Testen eines ATM-Telekommunikationsnetzes
Method and device to monitor and/or test an ATM telecommunications network

(30) Priorité: 12.07.1993 FR 9308797
(43) Date de publication de la demande: 15.02.1995
(73) Titulaire: FRANCE TELECOM, 75015 Paris (FR)
(72) Inventeur: Tremel, Jean-Yves, F-56100 Lorient (FR); Garandel, René, F-56100 Lorient (FR)
(74) Mandataire: Fournier, Michel Robert Marie

(56) Documents cités:
- EP-A- 0 511 671
- GLOBECOM '90, vol.3, Décembre 1990, NEW YORK, US pages 1445 - 1449 O. ABOUL-MAGD ET AL. 'TRAFFIC EXPERIMENTATION IN ATM TESTBED'
- NTT REVIEW, vol.4, no.4, 4 Juillet 1992, TOKIO, JP pages 38 - 44 H. MURAKAMI ET AL. 'MONITORING METHOD FOR CELL TRANSFER PERFORMANCE IN ATM NETWORKS'

## Description

L'invention concerne un procédé de surveillance et/ou de test pour réseau de télécommunication conforme à la norme ATM ("Asynchronous Transfer Mode") ou à une norme analogue. Elle concerne également un dispositif permettant la mise en oeuvre du procédé.

De la demande de brevet EP-A-0 511 671 est comme un dispositif de surveillance d'un commutateur de circuits virtuels ATM, permettant d'injecter à l'entrée du commutateur des cellules de test de les dériver en sortie du commutateur et de comparer les séquences d'entrée et de sortie. Les capacités d'un tel dispositif sont cependant limitées au test du transfert dans le commutateur auquel il est intégré.

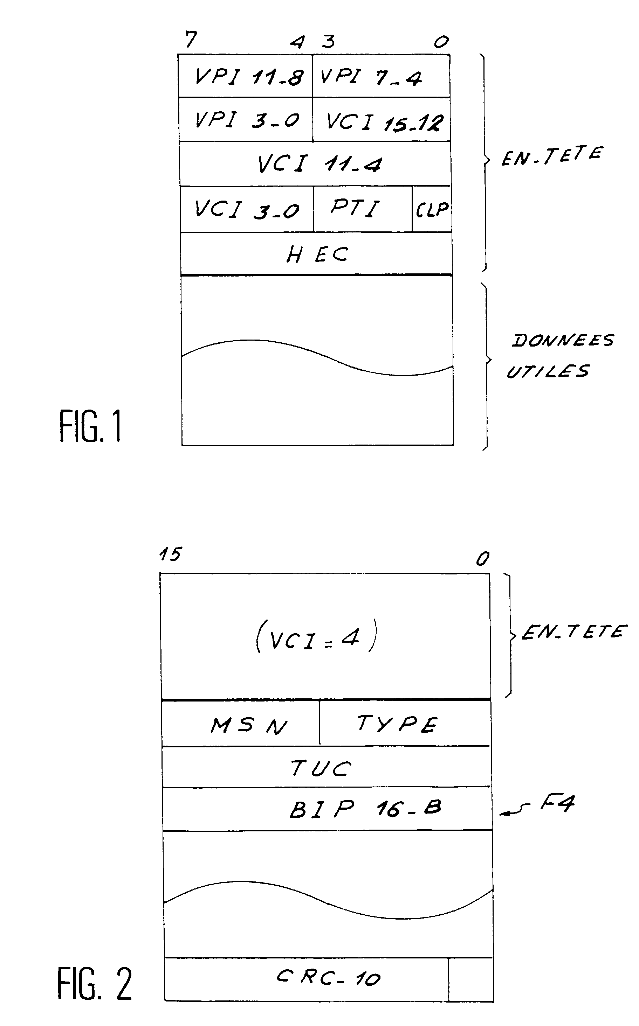

Nous rappelons que les transmissions d'informations dans un réseau ATM s'effectuent au moyen de cellules composées d'un en-tête de 5 octets et d'un bloc d'informations de 48 octets. Le format d'une telle cellule est représenté à la figure 1. Certaines cellules particulières, reconnaissables par les valeurs particulières de certains champs de l'en-tête, sont réservées aux opérations de maintenance et désignées selon la norme ATM comme cellules de maintenance F4 ou F5. Le contenu de ces cellules est élaboré au niveau des émetteurs pour fournir notamment des informations redondantes portant sur un ensemble de cellules utilisateur destinées à être émises. Ainsi, une transmission d'informations se présente sous la forme d'un bloc comportant un nombre déterminé de cellules utilisateur, ces cellules étant émises successivement et suivies d'une cellule de maintenance associée au bloc.

En plus des cellules de maintenance, la norme ATM permet d'introduire à l'intérieur même des cellules des données redondantes permettant de détecter des erreurs de transmission. Ce sera par exemple le cas des cellules affectées à la transmission des protocoles de communication pour les échanges avec les réseaux locaux.

Par ailleurs, la norme ATM permet un multiplexage temporel à plusieurs niveaux en organisant les flux de cellules en conduits virtuels VP ("Virtual Path") et voies virtuelles VC ("Virtual Channel"). Ainsi, toute cellule ATM peut être affectée à un conduit virtuel VP parmi 4.096 et à une voie virtuelle VC parmi 65.536. Les numéros du conduit et de la voie virtuels de la cellule sont contenus dans des champs respectivement de 12 et 16 bits de l'en-tête.

En conformité avec ces deux niveaux de multiplexage, la norme prévoit des cellules de maintenance spécifiques F4 et F5 affectées respectivement aux conduits virtuels VP et aux voies virtuelles VC. Ces cellules de maintenance permettent d'effectuer des vérifications de la qualité de la transmission soit au niveau des conduits virtuels, soit à celui des voies virtuelles. Pour cela, elles contiennent des informations de contrôle telles que des bits de parité calculés sur les données des cellules utilisateur du bloc associé.

Dans ce contexte, l'invention a pour but de rechercher un procédé pour vérifier le bon fonctionnement de la transmission des cellules au moyen des informations de contrôle mentionnées ci-dessus, cette méthode devant être conçue pour permettre sa mise en oeuvre au moyen d'un équipement aussi simple que possible. Le procédé doit en outre pouvoir être adapté facilement à des tests différents, par exemple pour vérifier les conduits virtuels seulement ou certains conduits virtuels choisis ou certaines voies virtuelles particulières ou encore pour vérifier les protocoles de communication.

Dans ce but, l'invention a pour objet un procédé de surveillance et/ou de test d'un réseau de télécommunication véhiculant des informations sous la forme de cellules conformes à la norme ATM ("Asynchronous Transfer Mode") ou analogue, lesdites cellules comportant un en-tête permettant de différencier les cellules utilisateur de cellules de maintenance, des informations de contrôle étant créées à l'émission et transmises dans les cellules utilisateur et/ou dans les cellules de maintenance émises, ledit procédé étant caractérisé en ce qu'il consiste :
- à lire en un point du réseau les cellules véhiculées,
- à effectuer un prétraitement consistant à mettre en forme les cellules lues, à sélectionner les cellules utiles à l'exécution d'opérations de tests, à recalculer une partie au moins des informations de contrôle, et à mettre sous forme de messages les informations de contrôle recalculées et les informations de contrôle reçues,
lesdits messages étant destinés à subir un traitement ultérieur pour vérifier notamment la cohérence entre les informations de contrôle recalculées et les informations de contrôle reçues.

Selon un autre aspect de l'invention, dans le cas où les informations de contrôle sont contenues dans les cellules de maintenance, lesdits messages peuvent être des messages d'un premier type pour contenir des informations de contrôle recalculées ou des messages d'un second type pour contenir les informations de contrôle des cellules de maintenance, lesdits messages du second type contenant un indicateur permettant de reconnaître qu'ils concernent des cellules de maintenance.

Pour pouvoir effectuer la surveillance des conduits virtuels, l'invention prévoit selon une caractéristique supplémentaire que les messages contiennent les numéros de conduits virtuels, le traitement ultérieur consistant alors à associer à chaque conduit virtuel un contexte sous la forme d'un compte-rendu permettant de vérifier la cohérence des informations de contrôle associées à ce conduit virtuel.

Si l'on veut effectuer la surveillance du réseau au niveau des voies virtuelles, la solution précédente nécessiterait de prévoir un contexte pour chaque couple de voie et de conduit virtuels. Il faudrait donc que l'équipement supporte un nombre de contextes supérieur à 268 millions. Afin de limiter ce nombre tout en permettant le test des voies virtuelles, l'invention prévoit selon une autre caractéristique que la sélection des cellules consiste à associer à certains conduits et voies virtuels prédéterminés des numéros correspondants de conduit virtuel fictif, les messages contenant alors les numéros de conduits virtuels fictifs de façon à ce que le traitement ultérieur consiste à associer à chaque conduit virtuel fictif un contexte associé.

On sait d'autre part que les transmissions d'informations dans les réseaux ATM s'effectuent par blocs de cellules de niveau ATM entre chacun desquels est émise une cellule de maintenance. Comme la quantité d'information à émettre ne correspond pas toujours exactement aux possibilités de blocs entiers de cellules, certaines des cellules de certains blocs contiendront des cellules vides, c'est-à-dire ne contenant aucune information autre que l'indication que ces cellules sont vides. Ces cellules sont en fait inutiles du point de vue maintenance. Aussi, selon un autre aspect de l'invention, la sélection des cellules consiste notamment à éliminer ces cellules vides.

L'invention a également pour objet un dispositif de surveillance pour la mise en oeuvre du procédé. Le dispositif est caractérisé en ce qu'il comporte :
- une unité de prétraitement recevant en entrée les cellules véhiculées en un point du réseau et prévue pour mettre en forme les cellules reçues, sélectionner les cellules utiles à l'exécution d'opérations de tests, recalculer une partie au moins des informations de contrôle et former des messages contenant les informations de contrôle recalculées et les informations de contrôle reçues,
- et en ce que l'unité de prétraitement communique avec une unité de traitement de façon à lui transmettre lesdits messages.

Selon un autre aspect du dispositif, dans le cas où les informations de contrôle sont contenues dans des cellules de maintenance, l'unité de prétraitement forme des messages d'un premier type pour contenir les informations de contrôle recalculées et des messages d'un second type contenant les informations reçues desdites cellules de maintenance, lesdits messages du second type contenant un indicateur permettant de reconnaître qu'ils concernent des cellules de maintenance.

Pour permettre la surveillance au niveau des voies virtuelles, le dispositif selon l'invention est en outre caractérisé en ce que l'unité de prétraitement comporte une mémoire de traduction adressable en fonction des valeurs des numéros de voie et conduit virtuels reçus, cette mémoire fournissant pour chaque couple de valeurs de voie et de conduit virtuels soit un mot représentatif d'une cellule non sélectionnée, soit un mot contenant une valeur d'un numéro de conduit fictif correspondant audit couple de valeurs, et en ce que l'unité de traitement est une unité programmée de façon à associer à chaque conduit virtuel fictif (VPF) un espace mémoire alloué à un contexte sous la forme d'un compte-rendu permettant la vérification de la cohérence des informations de contrôle recalculées et des informations de contrôle contenues dans les cellules appartenant audit conduit virtuel fictif (VPF).

D'autres aspects et avantages de l'invention apparaîtront dans la suite de la description en référence aux figures.
- la Figure 1 représente le format d'une cellule ATM ;
- la Figure 2 représente le format d'une cellule de maintenance de type F4 ;
- la Figure 3 représente un dispositif de surveillance selon l'invention ;
- les Figures 4 à 6 représentent des exemples de formats de messages formés selon l'invention.

La Figure 1 représente le format des cellules ATM. Un en-tête de 5 octets dont les bits sont numérotés de 0 à 7 contient le numéro de conduit virtuel VPI défini sur 12 bits, le numéro de voie virtuelle VCI défini sur 16 bits, un indicateur de type de cellule PTI défini sur 3 bits, un indicateur de priorité CLP défini sur 1 bit, ainsi qu'un code correcteur d'erreur HEC défini sur 8 bits et portant sur les 4 octets précédents.

L'en-tête est suivi de 48 octets d'informations réservés aux données utiles.

La Figure 2 représente le format en mots de 16 bits d'une cellule de maintenance de type F4. Elle est également composée d'un en-tête comportant les mêmes informations que précédemment. Par convention, le numéro de voie virtuelle VCI est fixé à la valeur 4 de façon à pouvoir différencier les cellules F4 des autres cellules.

Dans la partie utile de la cellule, on trouve notamment un numéro de séquence MSN ("Monitoring Cell Sequence Number") défini sur 8 bits indiquant modulo 256 l'ordre d'émission de la cellule. Le champ TUC ("Total User Cell Number") défini sur 16 bits indique le nombre total de cellules utilisateur non vides transmises avant l'insertion de la cellule de maintenance. Le champ BIP 16-B ("Bit Interleaved Parity") contient 16 bits de parité portant chacun sur l'ensemble des bits de même rang des données contenues dans les cellules utilisateur du bloc associé à la cellule de maintenance. Enfin, un champ CRC-10 défini sur 10 bits est affecté à un code correcteur d'erreur portant sur les données utiles de la cellule.

Les cellules de maintenance de type F5 affectées aux voies virtuelles sont analogues aux cellules de type F4. Toutefois, elles ne sont pas identifiées par un numéro de voie virtuelle VCI déterminé mais par une valeur fixée de l'indicateur de type de cellule PTI.

On peut déjà se rendre compte que les informations contenues dans les cellules de maintenance F4 ou F5 vont permettre d'effectuer certains tests permettant de détecter l'intégrité de la transmission. Avant de donner des précisions à ce sujet, il convient de décrire le dispositif de surveillance prévu pour effectuer ces tests.

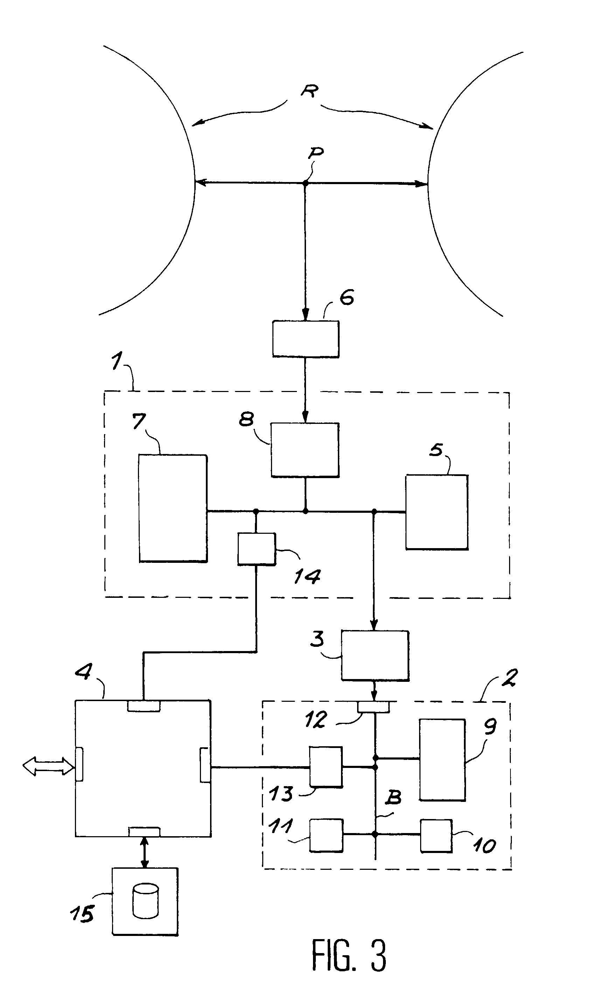

Le dispositif de surveillance est représenté à la figure 3. Il est essentiellement constitué d'une unité de prétraitement 1, d'une unité de traitement 2, et d'un processeur d'exploitation 4. L'unité de prétraitement 1 est reliée en un point P du réseau R par l'intermédiaire d'une interface 6 appropriée. L'unité 1 comprend une unité de commande programmable 7, un circuit de mise en forme 8 relié à l'interface 6 et une mémoire de traduction 5. L'unité de prétraitement 1 communique avec l'unité de traitement 2 par l'intermédiaire d'un tampon 3 constitué par exemple d'une mémoire de type FIFO.

L'unité de traitement 2 est un système microprogrammé de type temps réel classique comportant essentiellement un microprocesseur 9, une mémoire de programme 10, une mémoire de données 11, et un circuit d'interface 12 relié au tampon 3. Les unités 9, 10, 11 et 12 communiquent entre elles par l'intermédiaire d'un bus B. Une seconde interface 13 reliée au bus B permet à l'unité 2 de communiquer avec le processeur d'exploitation 4.

Le processeur d'exploitation 4 peut être un microordinateur classique muni d'interfaces (clavier, écran) permettant de communiquer avec un opérateur effectuant le test. Il sera également relié à une mémoire de masse 15 prévue pour emmagasiner les résultats des tests effectués. Le processeur 4 est également prévu pour communiquer avec l'unité de prétraitement 1 par l'intermédiaire de l'interface 14. Cette disposition est prévue pour pouvoir modifier le programme de l'unité 7 en vue d'effectuer différents types de tests. Elle permet également de charger le contenu de la mémoire de traduction 5.

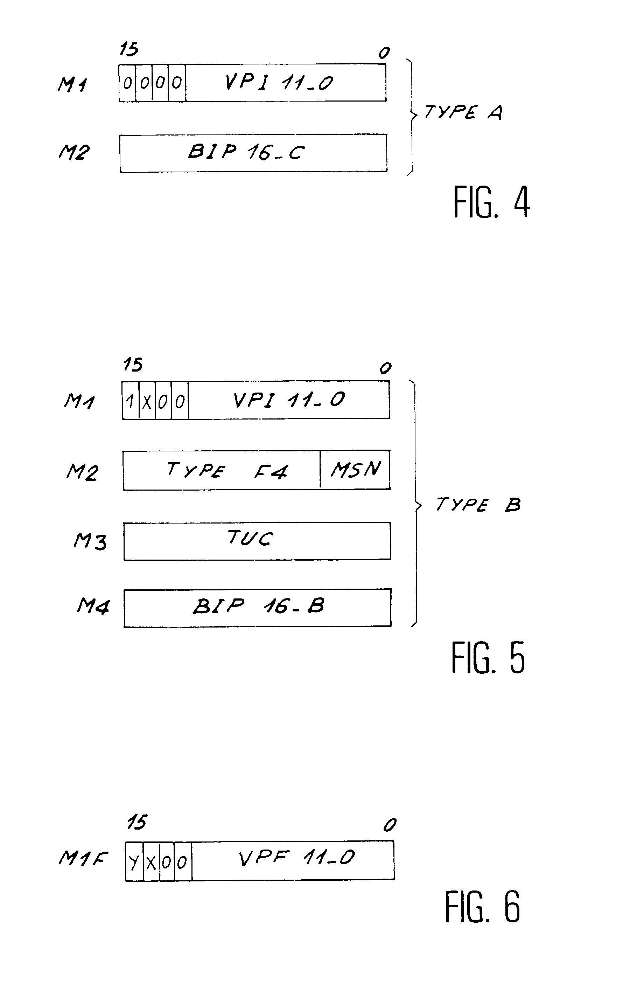

Le fonctionnement du dispositif de la figure 3 va maintenant être décrit. On supposera tout d'abord que l'unité de commande 7 est programmée pour effectuer des tests de conduits et voies virtuels. Dans ce cas, les messages ont les formats représentés aux figures 4 à 6.

Les cellules reçues par l'interface 6 sont transmises à l'unité 8 de mise en forme et de cadrage dont le rôle est également d'éliminer les cellules vides. Si le test porte sur les conduits virtuels VP, lorsque la cellule reçue est une cellule utilisateur, l'unité de commande 7 forme un message d'un premier type A tel que représenté à la figure 4. Le message est constitué d'un premier mot M1 contenant les 12 bits du numéro de conduit virtuel VPI, les 4 bits restants étant mis à 0. Le second mot M2 contient les 16 bits de parité BIT16-C calculés sur les données contenues dans la cellule. Le message est alors chargé dans la mémoire FIFO 3 en vue d'un traitement ultérieur dans l'unité 2.

Lorsque la cellule reçue est une cellule de maintenance de type F4, le message est de type B selon le format représenté à la figure 5. Un premier mot M1 contient sur 12 bits le numéro de conduit virtuel VPI. Le bit 15 du mot M1 est placé à 1 pour indiquer qu'il s'agit d'un message associé à une cellule de maintenance. Le bit 14 prend une valeur X égale à 0 ou à 1 selon que le code correcteur d'erreur CRC-10 contenu dans la cellule F4 est conforme ou non au code correcteur d'erreur recalculé à partir des données contenues dans la cellule.

Un second mot M2 contient le numéro de séquence MSN ainsi qu'une indication du type de cellule F4 (dans le cas où plusieurs types seraient prévus). Le troisième mot M3 contient la valeur du nombre total de cellules utilisateur TUC et le mot M4 contient l'ensemble de bits de parité BIP 16-B. Le message du type B ainsi formé est alors chargé dans le tampon 3.

Dans le cas où le test doit porter sur les voies virtuelles VC, il convient de réduire le nombre de messages qui devront être traités par l'unité 2. Pour cela, on utilise la mémoire de traduction 5 qui sera adressée par les champs VPI et VCI contenus dans les en-têtes des cellules (utilisateur ou de maintenance). La mémoire 5 fournit alors un numéro de conduit virtuel fictif VPF représentatif d'une voie et d'un conduit virtuels sélectionnés pour le test. Si la voie et le conduit virtuels ne sont pas sélectionnés, elle fournit une valeur particulière signalant ce cas. Avantageusement, la mémoire 5 pourra être conçue pour former directement le premier mot M1 du message. Pour cela, elle sera adressée par les 4 premiers octets de l'en-tête de la cellule et fournira en sortie le mot M1F tel que représenté à la figure 6. Ce mot contiendra donc les 12 bits du numéro de conduit virtuel fictif VPF 11-0 ainsi qu'un bit 15 dont la valeur Y sera égale à 0 ou à 1 selon que l'en-tête appartient à une cellule utilisateur ou à une cellule de maintenance. Dans ce dernier cas, le bit 14 prendra une valeur X égale à 0 ou à 1 selon la règle déjà exposée lors de la description des messages de type B.

Les messages ainsi formés sont ensuite traités par l'unité 2. Dans le cas par exemple d'un test des conduits virtuels VP, l'unité 2 associe à chaque conduit virtuel un espace mémoire réservé à un contexte sous la forme d'un compte-rendu permettant de vérifier la cohérence des informations de contrôle contenues dans les cellules de maintenance. Ce contexte est mis à jour en temps réel, au fur et à mesure de la réception des messages. Par exemple, un premier mot du contexte contiendra un cumul des BIP 16-C des messages de type A. Ce cumul devrait correspondre en fin de bloc de cellules au BIP 16-B de la cellule de maintenance associée au bloc. Un autre mot contiendra le nombre des messages de type A reçus qui devrait correspondre en fin de bloc à la valeur TUC. Un autre mot contiendra par exemple le nombre de CRC-10 erronés (détectés par le bit 14 du mot M1 des messages de type B).

Dans le cas de tests de voies virtuelles VC, le fonctionnement de l'unité 2 est analogue à la différence près que les contextes mémorisés concernent des conduits virtuels fictifs correspondants à des couples de voies et de conduits virtuels sélectionnés au moyen de la mémoire de traduction 5. Aux voies et conduits non sélectionnés pour le test, la mémoire fait correspondre une valeur déterminée, par exemple 0, auquel cas aucun message n'est formé.

Il est à noter que la mémoire de traduction pourrait être utilisée de façon analogue dans le cas de tests des conduits virtuels, si l'on souhaitait réduire également le nombre de contextes. Cette possibilité pourrait être adoptée en vue d'utiliser une unité de traitement 2 de faible puissance.

Grâce aux possibilités de programmation de l'unité de commande 7 et de la mémoire de traduction 5, l'équipement qui vient d'être présenté permet d'effectuer d'autres types de tests. On peut par exemple vérifier les protocoles de communication entre un réseau ATM et un réseau d'un autre type. Ces protocoles définissent une couche d'adaptation ATM et appelée AAL ("ATM Adaptation Layer"). Le protocole AAL utilise des cellules spécifiques associées à des voies et des conduits virtuels déterminés et ces cellules contiennent des informations de contrôle des protocoles. Comme pour les tests des voies virtuelles, on pourra utiliser la mémoire de traduction en vue de réduire le nombre de contextes gérés par l'unité de traitement 2. De même, l'unité de commande 7 convenablement programmée pour ce type de tests sera en mesure de former des messages contenant uniquement les informations utiles pour le test et la validation des protocoles.

## Revendications

1. Procédé de surveillance et/ou de test d'un réseau de télécommunication véhiculant des informations sous la forme de cellules conformes à la norme ATM ("Asynchronous Transfer Mode") ou analogue, lesdites cellules comportant un en-tête permettant de différencier les cellules utilisateur de cellules de maintenance (F4, F5), des informations de contrôle étant créées à l'émission et transmises dans les cellules utilisateur et/ou dans les cellules de maintenance émises, ledit procédé étant caractérisé en ce qu'il consiste :
- à lire en un point (P) du réseau (R) les cellules véhiculées,
- à effectuer un prétraitement consistant à mettre en forme les cellules lues, à sélectionner les cellules utiles à l'exécution d'opérations de tests, à recalculer une partie au moins des informations de contrôle, et à mettre sous forme de messages les informations de contrôle recalculées et les informations de contrôle reçues,
lesdits messages étant destinés à subir un traitement ultérieur pour vérifier notamment la cohérence entre les informations de contrôle recalculées et les informations de contrôle reçues.

2. Procédé selon la revendication 1, caractérisé en ce que dans le cas où des informations de contrôle sont contenues dans des cellules de maintenance, lesdits messages peuvent être des messages d'un premier type (A) pour contenir des informations de contrôle recalculées ou des messages d'un second type (B) pour contenir les informations de contrôle des cellules de maintenance, lesdits messages du second type (B) contenant un indicateur permettant de reconnaître qu'ils concernent des cellules de maintenance.

3. Procédé selon l'une des revendications 1 ou 2, caractérisé en ce que lesdites cellules contenant une indication d'un numéro de conduit virtuel (VPI), lesdits messages contiennent lesdits numéros de conduits virtuels (VPI) et en ce que ledit traitement ultérieur associe à chaque conduit virtuel (VP) un contexte sous la forme d'un compte-rendu permettant de vérifier ladite cohérence des informations de contrôle associées audit conduit virtuel (VP).

4. Procédé selon l'une des revendications 1 ou 2, caractérisé en ce que lesdites cellules contenant une indication d'un numéro de conduit virtuel (VPI) et d'un numéro de voie virtuelle (VCI), ladite sélection des cellules consiste à associer à certains conduits et voies virtuels prédéterminés des numéros correspondants de conduit virtuel fictif (VPF), en ce que lesdits messages contiennent lesdits numéros de conduit virtuel fictif (VPF) et en ce que ledit traitement ultérieur consiste à associer à chaque conduit virtuel fictif (VPF) un contexte sous la forme d'un compte-rendu permettant de vérifier ladite cohérence des informations de contrôle associées audit conduit virtuel fictif (VPF).

5. Procédé selon l'une des revendications 1 à 4, caractérisé en ce que ladite sélection des cellules consiste notamment à éliminer les cellules ne contenant aucune information.

6. Procédé selon la revendication 3, caractérisé en ce que l'une desdites informations de contrôle est un groupe de bits de parité (BIP) calculés sur les données contenues dans un ensemble de cellules utilisateur émises.

7. Dispositif de surveillance et/ou de test d'un réseau de télécommunication véhiculant des informations sous la forme de cellules conformes à la norme ATM ("Asynchronous Transfer Mode"), lesdites cellules comportant un en-tête permettant de différencier les cellules utilisateur de cellules de maintenance (F4, F5), des informations de contrôle étant créées à l'émission et transmises dans lesdites cellules utilisateur et/ou dans lesdites cellules de maintenance (F4, F5), ledit dispositif étant caractérisé en ce qu'il comporte :
- une unité de prétraitement (1) recevant en entrée les cellules véhiculées en un point (P) du réseau (R) et prévue pour mettre en forme les cellules reçues, sélectionner les cellules utiles à l'exécution d'opérations de tests, recalculer une partie au moins des informations de contrôle et former des messages contenant les informations de contrôle recalculées et les informations de contrôle reçues,
- et en ce que l'unité de prétraitement communique avec une unité de traitement (2) de façon à lui transmettre lesdits messages.

8. Dispositif selon la revendication 7, caractérisé en ce que dans le cas où les informations de contrôle sont contenues dans des cellules de maintenance (F4, F5), l'unité de prétraitement forme des messages d'un premier type (A) pour contenir les informations de contrôle recalculées et des messages d'un second type (B) contenant les informations reçues desdites cellules de maintenance, lesdits messages du second type (B) contenant un indicateur permettant de reconnaître qu'ils concernent des cellules de maintenance.

9. Dispositif selon l'une des revendications 7 ou 8, caractérisé en ce que lesdites cellules contenant une indication d'un numéro de conduit virtuel (VPI), lesdits messages contiennent lesdits numéros de conduit virtuel (VPI) et en ce que l'unité de traitement (2) est une unité programmée de façon à associer à chaque conduit virtuel (VP) un espace mémoire alloué à un contexte sous la forme d'un compte-rendu permettant une vérification de la cohérence des informations de contrôle recalculées et des informations de contrôle contenues dans les cellules appartenant audit conduit virtuel (VP).

10. Dispositif selon l'une des revendications 7 ou 8, caractérisé en ce que lesdites cellules contenant une indication d'un numéro de conduit virtuel (VPI) et d'un numéro de voie virtuelle (VCI), l'unité de prétraitement (1) comporte une mémoire de traduction (5) adressable en fonction des valeurs des numéros de voie et conduit virtuels (VPI, VCI) reçus et fournissant pour chaque couple de valeurs de voie et de conduit virtuels soit un mot représentatif d'une cellule non sélectionnée, soit un mot contenant une valeur d'un numéro de conduit fictif (VPF) correspondant audit couple de valeurs, et en ce que l'unité de traitement (2) est une unité programmée de façon à associer à chaque conduit virtuel fictif (VPF) un espace mémoire alloué à un contexte sous la forme d'un compte-rendu permettant la vérification de la cohérence des informations de contrôle recalculées et des informations de contrôle contenues dans les cellules appartenant audit conduit virtuel fictif (VPF).

11. Dispositif selon la revendication 10, caractérisé en ce que ladite mémoire de traduction (5) est également adressée par l'en-tête desdites cellules et en ce que le mot qu'elle fournit contient une indication de maintenance lorsque l'en-tête est celui d'une cellule de maintenance (F4, F5).

12. Dispositif selon la revendication 10 ou 11, caractérisé en ce qu'il comporte un processeur d'exploitation (4) des contextes relié à ladite unité de traitement (2) et en ce que ladite mémoire de traduction (5) est modifiable par ledit processeur d'exploitation (4).

## Patentansprüche

1. Verfahren zum Überwachen und/oder Testen eines Telekommunikationsnetzes zur Übertragung von Daten in Form von Zellen gemäß der ATM-Norm oder analog, wobei diese Zellen einen Kopf umfassen, der ermöglicht, die Benutzerzellen von Dienstzellen (F4, F5) zu unterscheiden, und beim Senden Steuer-informationen erzeugt werden und in den gesendeten Benutzerzellen und/oder Dienstzellen übertragen werden,
**dadurch gekennzeichnet**, daß es darin besteht:
- in einem Punkt (P) des Netzes (R) die übertragenen Zellen zu lesen,
- eine Vorverarbeitung durchzuführen, darin bestehend, die gelesenen Zellen zu formatieren, die zur Durchführung von Testoperationen nützlichen Zellen auszuwählen, wenigstens einen Teil der Steuerinformationen neu zu berechnen und die neuberechneten Steuerinformationen und die empfangenen Steuerinformationen in die Form von Mitteilungen zu bringen,
wobei die genannten Mitteilungen für eine spätere Verarbeitung bestimmt sind, um insbesondere die Kohärenz zwischen den neuberechneten Steuerinformationen und den empfangenen Steuer-informationen zu überprüfen.

2. Verfahren nach Anspruch 1, dadurch gekennzeichnet, daß für den Fall, wo Steuerinformationen in Dienstzellen enthalten sind, die genannten Mitteilungen Mitteilungen eines ersten Typs (A) sein können, die neuberechnete Steuerinformationen enthalten, oder Mitteilungen eines zweiten Typs (B), die einen Anzeiger enthalten, der ermöglicht, zu erkennen, daß sie Dienstzellen betreffen.

3. Verfahren nach einem der Ansprüche 1 oder 2, dadurch gekennzeichnet - wobei die genannten Zellen eine Anzeige bzw. Angabe einer Nummer eines virtuellen Pfads (VPI) enthalten -, daß die genannten Mitteilungen die genannten Nummern virtueller Pfade (VPI) enthalten, und dadurch, daß die genannte spätere Verarbeitung jedem virtuellen Pfad (VP) einen Kontext in Form eines Berichts zuordnet, der ermöglicht, die genannte Kohärenz der den genannten virtuellen Pfaden (VP) zugeordneten Steuerinformationen zu überprüfen.

4. Verfahren nach einem der Ansprüche 1 oder 2, dadurch gekennzeichnet - wobei die genannten Zellen eine Angabe einer Nummer eines virtuellen Pfads (VPI) und einer Nummer eines virtuellen Kanals (VCI) enthalten -, daß die genannte Auswahl der Zellen darin besteht, einigen festgelegten virtuellen Pfaden und Kanälen entsprechende Nummern fiktiver virtueller Pfade (VPF) zuzuordnen, dadurch, daß die genannten Mitteilungen die genannten Nummern fiktiver virtueller Pfade (VPF) enthalten, und dadurch, daß die genannte spätere Verarbeitung darin besteht, jedem fiktiven virtuellen Pfad (VPF) einen Kontext in Form eines Berichts zuzuordnen, der ermöglicht, die genannte Kohärenz der Steuerinformationen zu überprüfen, die dem genannten fiktiven virtuellen Pfad (VPF) zugeordnet sind.

5. Verfahren nach einem der Ansprüche 1 bis 4, dadurch gekennzeichnet, daß die genannte Auswahl der Zellen vor allem darin besteht, die Zellen zu eliminieren, die keine Information enthalten.

6. Verfahren nach Anspruch 3, dadurch gekennzeichnet, daß eine der Steuerinformationen eine Gruppe von Paritätsbits (BIP) ist, berechnet aufgrund der in einer Gruppe von gesendeten Benutzerzellen enthaltenen Daten.

7. Vorrichtung zum Überwachen und/oder Testen eines Telekommunikationsnetzes zur Übertragung von Daten in Form von Zellen gemäß der ATM-Norm, wobei diese Zellen einen Kopf umfassen, der ermöglicht, die Benutzerzellen von Dienstzellen (F4, F5) zu unterscheiden, und beim Senden Steuerinformationen erzeugt werden und in den gesendeten Benutzerzellen und/oder Dienst zellen übertragen werden, wobei diese Vorrichtung dadurch gekennzeichnet ist, daß sie umfaßt:
- eine Vorverarbeitungseinheit (1), die als Eingang die in einem Punkt (P) des Netzes (R) übertragenen Zellen empfängt und vorgesehen ist, die gelesenen Zellen zu formatieren, die zur Durchführung von Testoperationen nützlichen Zellen auszuwählen, wenigstens einen Teil der Steuerinformationen neu zu berechnen und Mitteilungen zu bilden, die die neuberechneten Steuer-informationen und die empfangenen Steuerinformationen enthalten, und
- eine Verarbeitungseinheit (2), an die die Vorverarbeitungseinheit (1) die genannten Mitteilungen überträgt.

8. Vorrichtung nach Anspruch 7, dadurch gekennzeichnet, daß für den Fall, wo die Steuerinformationen in Dienstzellen (F4, F5) enthalten sind, die Vorverarbeitungseinheit Mitteilungen eines ersten Typs (A) bildet, die die neuberechneten Steuerinformationen enthalten, und Mitteilungen eines zweiten Typs (B), die die von den genannten Dienstzellen erhaltenen Informationen enthalten, wobei die Mitteilungen des zweiten Typs (B) einen Anzeiger enthalten, der ermöglicht, zu erkennen, daß sie Dienstzellen betreffen.

9. Vorrichtung nach einem der Ansprüche 7 oder 8, dadurch gekennzeichnet, daß die genannten Zellen eine Anzeige bzw. Angabe einer Nummer eines virtuellen Pfads (VPI) enthalten, wobei die genannten Mitteilungen die genannten Nummern virtueller Pfade (VPI) enthalten, und dadurch, daß die Verarbeitungseinheit (2) eine derart programmierte Einheit ist, daß sie jedem virtuellen Pfad (VP) einen Speicherplatz mit einem Kontext in Form eines Berichts zuordnet, der ermöglicht, die Kohärenz der neuberechneten Steuerinformationen und der Steuerinformationen zu überprüfen, die in den Zellen enthalten sind, welche zu den genannten virtuellen Pfaden (VP) gehören.

10. Vorrichtung nach einem der Ansprüche 7 oder 8, dadurch gekennzeichnet - wobei die genannten Zellen eine Angabe einer Nummer eines virtuellen Pfads (VPI) und einer Nummer eines virtuellen Kanals (VCI) enthalten -, daß die Vorverarbeitungseinheit (1) einen Übersetzungs- bzw. Umrechnungsspeicher (5) umfaßt, adressierbar in Abhängigkeit von den Werten der empfangenen Nummern virtueller Pfade und Kanäle (VPI, VCI), der für jedes Paar von Werten eines virtuellen Pfads und eines virtuellen Kanals entweder ein repräsentatives Wort einer nicht ausgewählten Zelle liefert oder ein Wort, das einen Wert einer Nummer eines fiktiven Pfads (VPF) liefert, der dem genannten Wertepaar entspricht, und dadurch, daß die Verarbeitungseinheit (2) ein derart programmierte Einheit ist, daß sie jedem dem genannten Wertepaar entsprechenden fiktiven virtuellen Pfad (VPF) einen Speicherplatz mit einem Kontext in Form eines Berichts zuordnet, der ermöglicht, die Kohärenz der neuberechneten Steuerinformationen und der Steuerinformationen zu überprüfen, die in den Zellen enthalten ist, welche zu den genannten fiktiven virtuellen Pfaden (VPF) gehören.

11. Vorrichtung nach Anspruch 10, dadurch gekennzeichnet, daß der genannte Übersetzungs- bzw. Umrechnungsspeicher (5) ebenfalls durch den Kopf der genannten Zellen adressiert wird, und dadurch, daß das Wort, das er liefert, eine Dienstangabe enthält, wenn der Kopf der einer Dienstzelle (F4, F5) ist.

12. Vorrichtung nach Anspruch 10 oder 11, dadurch gekennzeichnet, daß er einen Auswertungsprozessor (4) der Kontexte umfaßt, verbunden mit der Verarbeitungseinheit (2), und dadurch, daß der Übersetzungs- bzw. Umrechungsspeicher (5) modifizierbar ist durch den Auswertungsspeicher (4).

## Claims

1. A method of monitoring and/or testing a telecommunications network carrying information in the form of cells complying with the ATM standard (Asynchronous Transfer Mode) or similar, said cells having a header to allow user cells to be distinguished from maintenance cells (F4, F5), the control data being created on transmission and transmitted in the user cells and/or in the maintenance cells transmitted, said method being characterised in that it consists in:
- reading the carried cells at a point (P) of the network (R),
- preliminary processing consisting in editing the cells read, selecting the cells which can be used to conduct test operations, re-calculating at least some of the control data and placing the re-calculated control data and the control data received in message format,
- said messages being intended for subsequent processing as a means of checking in particular the consistency between the re-calculated data and the control data received.

2. A method as claimed in claim 1, characterised in that if control data are contained in the maintenance cells, said messages may be messages of a first type (A) which will contain re-calculated control data or messages of a second type (B) which will contain the control data of the maintenance cells, said messages of the second type (B) containing an indicator so that these can be recognised as relating to maintenance cells.

3. A method as claimed in one of claims 1 or 2, characterised in that said cells contain a virtual path identification number (VPI), said messages contain said virtual path identifiers (VPI) and in that said subsequent processing associates a context with each virtual path in the form of a report allowing said coherence of control data associated with said virtual path (VP) to be checked.

4. A method as claimed in one of claims 1 or 2, characterised in that said cells contain a virtual path identifier (VPI) and a virtual channel identifier (VCI) and said selection of cells consists in associating corresponding fictitious virtual path (VPF) numbers with certain predetermined virtual paths and channels, in that said messages contain said fictitious virtual path (VPF) numbers and in that said subsequent processing consists in associating a context with each fictitious virtual path (VPF) in the form of a report allowing said coherence of control data associated with said fictitious virtual path (VPF) to be checked.

5. A method as claimed in one of claims 1 to 4, characterised in that said selection of cells consists in particular of dropping cells which do not contain any information.

6. A method as claimed in claim 3, characterised in that one of said control data items is a group of parity bits (BIP) calculated from the data contained in a set of transmitted user cells.

7. A device for monitoring and/or testing a telecommunications network carrying information in the form of cells complying with the ATM standard (Asynchronous Transfer Mode), said cells having a header to allow user cells to be distinguished from maintenance cells (F4, F5), the control data being created on transmission and transmitted in said user cells and/or in said maintenance cells (F4, F5), said device being characterised in that it comprises :
- a pre-processing unit (1) which receives as input the cells carried at a point (P) of the network (R) and provided in order to edit the received cells, select the cells that will be used to run test operations, re-calculate at least some of the control data and set up messages containing the re-calculated control data and the control data received,
- and in that the pre-processing unit communicates with a processing unit (2) in order to transmit said messages thereto.

8. A device as claimed in claim 7, characterised in that if the control data are contained in the maintenance cells (F4, F5), the pre-processing unit sets up messages of a first type (A) to contain the re-calculated control data and messages of a second type (B) containing the data received from said maintenance cells, said messages of the second type (B) containing an identifier which allows them to be recognised as relating to maintenance cells.

9. A device as claimed in one of claims 7 or 8, characterised in that said cells contain a virtual path identifier (VPI), said messages contain said virtual path identifiers (VPI) and in that the processing unit (2) is a unit programmed to associate with each virtual path (VP) a memory space allocated to a context in the form of a message allowing the coherence of the re-calculated control data and the control data contained in the cells belonging to said virtual path (VP) to be checked.

10. A device as claimed in one of claims 7 or 8, characterised in that said cells contain a virtual path identifier (VPI) and a virtual channel identifier (VCI) and the pre-processing unit (1) has a translation memory (5) which can be addressed as a function of the values of the virtual path and channel identifiers (VPI, VCI) received and supplying for each pair of virtual path and channel values either a word representative of a non-selected cell or a word containing a value for a fictitious virtual path (VPF) corresponding to said pair of values, and in that the processing unit (2) is a unit programmed to associate with each fictitious virtual path (VPF) a memory space allocated to a context in the form of a report allowing the coherence of re-calculated control data and control data contained in the cells belonging to said fictitious virtual path (VPF) to be checked.

11. A device as claimed in claim 10, characterised in that said translation memory (5) is also addressed by the header of said cells and in that the word which it supplies contains a maintenance indicator if the header is that of a maintenance cell (F4, F5).

12. A device as claimed in claim 10 or 11, characterised in that it has a context-handling processor (4) linked to said processing unit (2) and in that said translation memory (5) can be modified by said handling processor (4).
